# EUROPÄISCHE PATENTSCHRIFT

(11) **EP 0 438 836 B1**
(45) Veröffentlichungstag und Bekanntmachung des Hinweises auf die Patenterteilung: **20.09.1995**
(21) Anmeldenummer: 90203520.3
(22) Anmeldetag: 28.12.1990
(51) Int. Cl.: C08G 18/38, C08G 18/34, C08G 18/28, B01F 17/00

(54) **Dispergiermittel, ihre Verwendung und damit beschichtete Feststoffe**
Dispersants, use thereof and solids coated therewith
Agents dispersants, leur utilisation et solides enrobés avec ceux-ci

(30) Priorität: 29.12.1989 EP 89203342
(43) Veröffentlichungstag der Anmeldung: 31.07.1991
(73) Patentinhaber: EFKA-CHEMICALS B.V., NL-2182 GZ Hillegom (NL)
(72) Erfinder: Quednau, Peter Hermann, NL-2182 ZN Hillegom (NL)
(74) Vertreter: Smulders, Theodorus A.H.J., Ir.

(56) Entgegenhaltungen:
- EP-A- 0 154 678
- EP-A- 0 270 126
- EP-A- 0 318 999
- US-A- 3 684 771
- US-A- 3 817 944

## Beschreibung

Die vorliegende Erfindung betrifft Dispergiermittel oder deren Salze, auf der Basis einer mindestens eine ringstickstoffhaltige basische Gruppe enthaltenden Verbindung

Die Erfindung betrifft weiterhin die Verwendung der Dispergiermittel und in flüssige Systeme einzuarbeitende pulver- oder faserförmige Feststoffe, die mit solchen Dispergiermitteln beschichtet sind.

Um Feststoffe in flüssige Medien einzubringen, sind hohe mechanische Kräfte notwendig. Dies hängt in hohem Mass von der Benetzbarkeit des Feststoffs durch das umgebende Medium sowie von der Affinität zu diesem Medium ab. Um diese Dispergierkräfte zu reduzieren, ist es üblich, Dispergiermittel anzuwenden, welche die Einarbeitung erleichtern. Hierbei handelt es sich meistens um oberflächenaktive Stoffe, auch Tenside genannt, von anionen- oder kationenaktiver sowie nicht-ionogener Struktur. Diese Stoffe werden in relativ geringen Zusatzmengen, entweder auf dem Feststoff direkt aufgebracht oder dem Dispergiermedium zugesetzt. Durch ein solches Tensid wird der Dispergieraufwand wesentlich reduziert.

Bekannt ist weiterhin, dass diese Feststoffe nach dem Dispergierprozess wieder zum Reagglomerieren neigen, was den zuvor aufgewendeten Dispergieraufwand zunichte macht und zu gravierenden Problemen führt. Dieses Phänomen erklärt man sich durch London/van der Waals Kräfte, durch welche sich die Feststoffe gegenseitig anziehen. Um diese Anziehungskräfte zu überlagern, müssen Adsorptionsschichten auf die Feststoffe aufgebracht werden. Dies geschieht durch die Verwendung solcher Tenside.

Während und nach der Dispergierung tritt jedoch eine Wechselwirkung des umgebenden Mediums mit dem Feststoffpartikel ein, und es erfolgt eine Desorption des Tensides unter Austausch gegen das, in höherer Konzentration vorliegende, umgebende Medium. Dieses umgebende Medium ist jedoch in den meisten Fällen nicht in der Lage, solche stabilen Adsorptionsschichten aufzubauen, und das gesamte System bricht zusammen. Dies macht sich bemerkbar durch Viskositätsanstieg in flüssigen Systemen, Glanzverluste und Farbtonverschiebungen in Lacken und Beschichtungen, ungenügende Farbkraftentwicklung in pigmentierten Kunststoffen, sowie Verringerung der mechanischen Festigkeit in verstärkten Kunststoffen.

In der europäischen Patentanmeldung 154.678 ist ein Dispergiermittel beschrieben, umfassend das Reaktionsprodukt eines Polyisocyanats mit einer Valenz von 2,5 bis 6 mit einer Monohydroxyverbindung, einer difunktionellen Komponente und einer Verbindung, die einen basischen Ringstickstoff enthält.

Durch die Art der Verbindungen und der damit verbundenen Reaktionen ist es wesentlich, dass das Produkt gemäss einer Mehrstufenmethode hergestellt wird. Im Hinblick auf die Produktionseffizienz ist dies nicht erwünscht. Ausserdem kommt das Problem auf, dass sowohl das Zwischenprodukt, wie das Endprodukt nicht sehr stabil sind und zur Gelierung neigen.

Mehr insbesondere kann bemerkt werden, dass es gemäss der bekannten Methode erforderlich ist, eine Mehrstufen-Arbeitsweise anzuwenden, bei der nach der Stufe 1, in der zuerst das Polyisocyanat mit den Monomerverbindungen vorreagiert werden muss, erst in der Stufe 2 mit einer difunktionellen Verbindung gearbeitet werden kann. Wird nicht nach diesem unwirtschaftlichen Verfahren gearbeitet, indem man die Komponenten der Stufen 1 und 2 von Anfang an zur Reaktion bringt, so kommt es in der Verfahrensstufe 3 zur Komplikation, derart, dass es zur starken Bildung von Gelteilchen kommt und dann auch ein Gelieren der gesamten Masse eintritt.

Das aus den Reaktionsstufen 1 und 2 resultierende Intermediat, das in der Stufe 3 mit Verbindungen der Formel III zum Lieferform-Produkt umgesetzt wird, ist nur sehr begrenzt lagerstabil (ca. 24 hrs) und somit nicht geeignet für die Bevorratung als Basis für weitere Additionsreaktionen.

Die nach dem beschriebenen Verfahren hergestellten Produkte weisen in der dritten Reaktionsstufe eine starke Neigung zur Gelierung auf, so dass diese Reaktionen nur in stark verdünnten Lösungen vorgenommen werden können, wodurch Endprodukte mit nur relativ geringem Feststoffgehalt erhalten werden. Die Erhöhung des Festkörpers durch anschliessende Vakuumdestillation ist aufgrund der ausgeprägten Koagulationsneigung des Produktes nicht möglich.

Die bekannten Dispergiermittel haben weiterhin eine Verträglichkeit, eine Löslichkeit und eine Dispergierwirkung die nicht sehr gut sind.

Der vorliegenden Erfindung liegt die Aufgabe zugrunde, Dispergiermittel zu schaffen, die gegenüber den bekannten Dispergiermitteln verbesserte Eigenschaften, insbesondere verbesserte Verträglichkeit mit Bindemittel, verbesserte Löslichkeit und verbesserte Dispergierwirkung besitzen.

Weiterhin ist es eine Aufgabe der Erfindung, Dispergiermittel zu schaffen, die die obigen Nachteile bezüglich der Herstellung nicht oder in wesentlich geringerem Umfange aufweisen, und die insbesondere zu Dispersionen von Feststoffen führen, die nach dem Dispergierprozess nicht oder nur in untergeordnetem Ausmasse zum Reagglomerieren neigen.

Es wurde nun überraschenderweise gefunden, dass diese Aufgabenstellung mit den nachfolgend definierten Dispergiermitteln gelöst werden kann.

Gegenstand der Erfindung ist demgemäss Dispergiermittel oder deren Salze, umfassend
- **A**: das Reaktionsprodukt eines oder mehrerer Polyisocyanate mit einer mittleren Funktionalität von 2,0 bis 5, mit
- **B**: einem Gemisch aus
B₁ Monohydroxyverbindungen aus aliphatischem und/oder cycloaliphatischem und/oder araliphatischem Kohlenwasserstoff, der gegebenenfalls mit Aryl- und/oder Halogengruppen substituiert sein kann, oder aber eine oder mehrere Aether- und/oder Estergruppen enthalten kann und
B₂ Monohydroxy-Monocarbonsäureverbindungen, oder Monoamino-Monocarbonsäureverbindungen, wobei eine Dihydroxyverbindung im Gemisch anwesend sein kann, in einer Menge, dass damit weniger als 5% der Isocyanatgruppen umgesetzt wird, und
- **C**: wenigstens einer Verbindung aus der Gruppe von 2-(1-Pyrrolidyl)-ethylamin, 4-Amino-2-methoxy-pyrimidin, 4-(2-Hydroxyethyl)morpholin, 2-Mercaptopyrimidin, 4-(2-Aminoethyl)pyridin, 2-Amino-6-methoxybenzothiazol, 4-Aminomethyl)pyridin, 3-Amino-1,2,4-triazol, 1-(3-Aminopropyl)imidazol, 4-(2-Hydroxyethyl)pyridin, 1-(2-Hydroxyethyl)imidazol und 3-Mercapto-1,2,4-triazol,
wobei von den Isocyanatgruppen 30-80% mit B und 20-70% mit C umgesetzt sind.

Überraschenderweise wurde jetzt gefunden, dass die Dispergiermittel nach der Erfindung eine bessere Verträglichkeit mit z.B. Alkydharzen und ölfreien Polyesterharzen, eine bessere Löslichkeit und eine bessere Dispergierwirkung verschiedener schwer zu stabilisierender Pigmente besitzen.

In der Anwendung dieser Bindemittel sind diese Vorteile sehr wichtig. Dadurch sind die Bindemittel besser zu verwenden für die Dispergierung von Pigmenten in Bindemitteln. Mehr insbesondere bietet die bessere Löslichkeit die Möglichkeit, die Dispergiermittel in 'high solids'-Lacken zu verwenden, da es in solchen Systemen von Vorteil ist, weniger Lösemittel zu verwenden.

Bei Anwendung von Monohydroxycarbonsäuren oder Monoaminocarbonsäuren anstelle der bekannten beschriebenen di- und trimeren Verbindungen können bei der Herstellung der Dispergiermittel folgende Vorteile erreicht werden:

Das im EP-A 154.678 beschriebene umständliche und unwirtschaftliche 2-Stufen-Verfahren zur Herstellung des Zwischenproduktes kann bei Einsatz von Monohydroxycarbonsäuren in einem Schritt vorgenommen werden, ohne dass eine Gelbildung bei der Reaktion in dritter Stufe eintritt.

Die mit Monohydroxycarbonsäuren oder Monoaminocarbonsaüren hergestellten Vorprodukte haben eine erheblich verbesserte Lagerfähigkeit (mehrere Wochen), so dass aus einem Intermediat die verschiedensten Endprodukte, auch nach längerer Zwischenlagerung, hergestellt werden können.

Aufgrund der geringen Gelneigung in der dritten Reaktionsstufe besteht die Möglichkeit, Endprodukte mit erhöhtem Feststoffgehalt herzustellen, was von Vorteil ist bei der Herstellung von Lacken mit hohem Feststoffgehalt.

Gemäss der Erfindung verwendet man in den Dispergiermitteln ein Polyisocyanat mit einer Funktionalität von 2,0 bis 5, vorzugsweise etwa 4. Geeignete Polyisocyanate sind die, welche z.B. durch Addition von Diisocyanaten an Polyole erhalten werden können nach der Formel 1 des Formelblattes, Handelsprodukt: Desmodur L (TM),
oder die durch Biuretreaktion aus Diisocyanaten erhalten werden können, siehe Formel 2 des Formelblattes, Handelsprodukt: Desmodur N (TM),
oder aber die durch Cyclisierung von Diisocyanaten erhältlichen Polyisocyanate mit Isocyanurat Grundstruktur, siehe Formel 3, Handelsprodukt: Desmodur HL (eingetragenes Warenzeichen), Formel 4: Handelsprodukt Desmodur IL (eingetragenes Warenzeichen), Formel 5, Handelsprodukt Polurene KC (eingetragenes Warenzeichen), Formel 6: Handelsprodukt Polurene HR (eingetragenes Warenzeichen), Formel 7 Toluylendiisocyanat-isophorondiisocyanat-isocyanurat oder Formel 8, Trimeres Isophorondiisocyanat (Isocyanurat T1890 der Firma Chemische Werke Hüls)
Wie bereits oben dargelegt, handelt es sich bei den einschlägigen Verbindungen um Handelsprodukte, die häufig nicht in reiner Form die obigen chemischen Formeln aufweisen, sondern die Gemische von gewissen Verbindungen ähnlicher Struktur darstellen. Unter mittlerer Funktionalität wird verstanden, dass die Handelsprodukte hinsichtlich der Isocyanatgruppen die angegebene Funktionalität von 2,0 bis 5, vorzugsweise ca. 4, aufweisen.

Im Gemisch von Hydroxyverbindungen befindet sich jedenfalls mindestens eine Monohydroxyverbindung mit einem aliphatischen und/oder cycloaliphatischen Kohlenwasserstoff, der gegebenenfalls mit Aryl- und/oder Halogengruppen substituiert sein kann, oder aber eine oder mehrere Aether- und/oder Estergruppen enthalten kann. Vorzugsweise hat die Monohydroxyverbindung ein Molekulargewicht von mindestens 500 und mehr insbesondere zwischen 750 und 3500. Bei diesen Molekulargewichten erhält man eine optimale dispergierende Wirkung. Es ist auch noch möglich, einen oder mehrere Substituenten in der Monohydroxyverbindung anzubringen, welche die Verträglichkeit mit Alkydharzen vergrössert.

Wichtig ist wohl, dass die betreffende Monohydroxyverbindung außer der Hydroxylgruppe keine Substituenten enthält, die reaktiv sind mit Isocyanaten unter den Bedingungen der Herstellung des Dispergiermittels gemäss der Erfindung.

Als Monohydroxyverbindungen können aliphatische, cycloaliphatische und/oder araliphatische Verbindungen eingesetzt werden. Es können auch Gemische solcher Verbindungen eingesetzt werden. Es können geradkettige und verzweigte aliphatische oder araliphatische Verbindungen eingesetzt werden. Sie können gesättigt oder ungesättigt sein. Gesättigte Verbindungen sind bevorzugt. Die Wasserstoffatome können teilweise durch Halogene, vorzugsweise durch Fluor und/oder auch Chlor ersetzt sein. Wenn derart substituierte Verbindungen eingesetzt werden, handelt es sich vorzugsweise um aliphatische Monoalkohole. Produkte sind im Handel erhältlich, wobei, wie dem Fachmann bekannt, die der Hydroxylgruppe nahekommenden Kohlenstoffatome in der Regel keine Halogenatome aufweisen. Beispiele für spezielle fluorierte Alkohole sind Heptadecafluorodecanol, oder C₆F₁₃CH₂CH₂OH. Die im Handel erhältlichen entsprechenden Produkte sind häufig nicht einheitlich, sondern Gemische von verschiedenen fluorierten Verbindungen, wie sie bei der technischen Synthese erhalten werden.

Als Monohydroxyverbindungen können auch solche eingesetzt werden, die mindestens eine -O- und/oder COO-Gruppe enthalten. Es handelt sich also um Polyether, Polyester oder gemischte Polyether-Polyester. Beispiele für Polyester sind solche, die durch Polymerisation eines Lactons, wie Propiolacton, Valerolacton, Caprolacton oder deren substituierte Derivate mittels einer Monohydroxy-Startkomponente erhalten werden können. Als Startkomponente werden Monoalkohole, zweckmässig mit 4 bis 30, vorzugsweise 4 bis 14 C-Atomen, wie n-Butanol, längerkettige, gesättigte und ungesättigte Alkohole, wie Propargylalkohol, Oleylalkohol, Linoloylalkohol, Oxoalkohole, Cyclohexanol, Phenylethanol, Neopentylalkohol, aber auch fluorierte Alkohole, wie sie oben erwähnt sind, eingesetzt. Es können auch Alkohole der zuvor beschriebenen Art und substituierte und unsubstituierte Phenole durch Alkoxylierung nach bekannten Verfahren mit Ethylenoxid und/oder Propylenoxid in Polyoxyalkylenmonoalkyl, Aryl-, Aralkyl- und Cycloalkylether überführt werden und diese Monohydroxypolyether in der vorbeschriebenen Art als Startkomponente für die Lactonpolymerisation eingesetzt werden. Jeweils können auch Gemische von vorgenannten Verbindungen eingesetzt werden. Diese Polyester haben zweckmässig ein Molekulargewicht im Bereich von etwa 300 bis 8000, vorzugsweise 500 bis 5000.

Es können auch Monohydroxypolyether eingesetzt werden, wie sie durch Alkoxylierung von Alkanolen, Cycloalkanolen und Phenolen erhalten werden. Diese Polyester haben zweckmässig ein Molekulargewicht im Bereich von etwa 350 bis 1500.

Im Gemisch von Hydroxyverbindungen befindet sich auch wenigstens eine Monohydroxy-Monocarbonsäureverbindung. Vorzugsweise verwendet man dazu eine Kohlenwasserstoffverbindung, wobei sich zwischen der Hydroxylgruppe und der Carbonsäuregruppe mindestens acht Kohlenstoffatome befinden. Erwünschtenfalls kann diese Kohlenstoffkette noch durch Amid, Aether, Ester, S, SO₂ und/oder Urethangruppen unterbrochen sein. Im allgemeinen wird es zur Verbesserung der Verträglichkeit des Dispergiermittels mit verschiedenen Materialen bevorzugt, dass das Molekulargewicht der Monohydroxy-Monocarbonsäureverbindung mindestens 500 beträgt, mehr insbesondere zwischen 750 und 4000 liegt.

Geeignete Monohydroxy-Monocarbonsäureverbindungen können erhalten werden durch Veresterung von Hydroxycarbonsäuren, durch Umsetzung eines Diols mit einer Dicarbonsäure oder einem Anhydrid. Dabei ist es möglich, von einem höhermolekularen Diol, wie einem Polyäthylenglykol, auszugehen, und dieses mit einer einfachen Dicarbonsäure oder einem Dicarbonsäureanhydrid umzusetzen. Es ist auch möglich, eine hochmolekulare Dicarbonsäure mit einem niedermolekularen Diol umzusetzen. Schliesslich ist es auch möglich, nahezu stöchiometrische Mengen an niedermolekularem Diol und niedermolekularer Dicarbonsäure miteinander umzusetzen unter Bedingungen, dass möglichst viel Monohydroxy-Monocarbonsäure gebildet wird und jedenfalls keine oder nahezu keine Dihydroxyverbindung gebildet wird. Bevorzugt wird die Anwendung des Umsetzungsproduktes einer niedermolekularen Dicarbonsäure mit einem höhermolekularen Diol, wie einem Polyäthylenglykol.

Die Monohydroxy-Monocarbonsäuren können völlig oder teilweise ersetzt werden durch Monoamino-Monocarbonsäuren. Für die Monoaminocarbonsaüre gelten die analogen Bemerkungen wie für die Monohydroxycarbonsäure.

Das Verhältnis der Mengen Hydroxylgruppen, die in einerseits der Monohydroxyverbindung und andererseits der Monohydroxy-Monocarbonsäureverbindung vorhanden sind, kann innerhalb ziemlich breiter Grenzen variieren, in Abhängigkeit von der Anwendung. Vorzugsweise ist die Monohydroxy-Monocarbonsäureverbindung in einem Unterschuss in bezug auf die Monohydroxyverbindung vorhanden. Das Verhältnis der Anzahl Hydroxylgruppen, die von beiden Typen Verbindungen herrührt, variiert von 1:1 bis 10:1. Vorzugsweise liegt dieses Verhältnis zwischen 2:1 und 5:1. Bei der Verwendung einer Monoamino-Monocarbonsäureverbindung ist das Verhältnis der Anzahl an Hydroxylgruppen aus den Monohydroxyverbindungen und an Aminogruppen von 1:1 bis 10:1. Vorzugsweise liegt dieses Verhältnis zwischen 2:1 und 5:1.

Eine wichtige Komponente in dem Dispergiermittel gemäss der Erfindung ist eine Verbindung, die einen basischen Ringstickstoff enthält. Geeignete Verbindungen sind: 1-(2-Aminoethyl)piperazin, 2-(1-Pyrrolidyl)-ethylamin, 4-Amino-2-methoxy-pyrimidin, 1-(2-Hydroxyethyl)piperazin, 4-(2-Hydroxyethyl)morpholin, 2-Mercaptopyrimidin, 2-Mercaptobenzimidazol. Besonders bevorzugt sind 4-(2-Aminoethyl)pyridin, 2-Amino-6-methoxybenzothiazol, 4-Aminomethyl)pyridin, N,N-Diallylmelamin, 3-Amino-1,2,4-triazol, 1-(3-Aminopropyl)imidazol, 4-(2-Hydroxyethyl)pyridin, 1-(2-Hydroxyethyl)imidazol und 3-Mercapto-1,2,4-triazol.

Charakteristisch für diese Verbindungen ist, dass sie pro Molekül mindestens 1 Zerewitinoff-Wasserstoffatom enthalten, das bevorzugt mit den Isocyanatgruppen reagiert, und dass sie darüber hinaus eine stickstoffhaltige basische Gruppe besitzen, die nicht zur Harnstoffbildung mit Isocyanatgruppen befähigt ist. Diese basischen Gruppen werden gemäss dem Stand der Technik auch durch ihren pKa-Wert gekennzeichnet (vergl. US-A 3.817.944; 4.032.698 und 4.070.388). Bevorzugt sind Verbindungen mit basischen Gruppen mit einem pKa-Wert von 2 bis 14, besonders bevorzugt von 5 bis 14, und ganz besonders bevorzugt von 5 bis 12. Der pKa-Wert kann Tabellenwerken entnommen werden. Die vorstehend angegebenen Grenzwerte beziehen sich auf die Messung des pKa-Werts bei 25°C in einer 0.01-molaren Konzentration in Wasser. Diese basischen Gruppen verleihen den Additionsverbindungen gemäss der Erfindung ebenfalls eine Basizität, wie auch auf diesem technischen Gebiet bekannt ist (vergl. die oben genannten US-Patentschriften).Durch diese basischen Gruppen sind die Additionsverbindungen zur Salzbildung befähigt. Sie können im Sinne der Erfindung als Dispergiermittel auch in Form von derartigen Salzen eingesetzt werden.

Diese Salze werden aus dem erhaltenen Reaktionsprodukt durch Neutralisation mit organischen oder anorganischen Säuren oder durch Quaternisierung erhalten. Bevorzugt sind Salze mit organischen Monocarbonsäuren.

Bemerkt wird, dass es gegebenenfalls auch möglich ist, eine untergeordnete Menge einer Dihydroxyverbindung in das erfindungsgemässe Dispergiermittel aufzunehmen. Die Menge derselben ist jedoch immer derart, dass damit nur ein Bruchteil, d.h. weniger als 5%, vorzugsweise weniger als 2,5% der Isocyanatgruppen umgesetzt wird. Bevorzugt wird doch, daß keine Dihydroxyverbindung anwesend ist.

Die Umsetzung von Isocyanatgruppen erfolgt unter Anwendung bekannter Methoden. Im allgemeinen wird bevorzugt, die Reaktion derart auszuführen, dass in einer ersten Stufe das Polyisocyanat mit einer Mischung einer Monohydroxyverbindung und einer Monohydroxy-Monocarbonsäureverbindung umgesetzt wird. Diese Umsetzung erfolgt im allgemeinen in einem geeigneten Lösungsmittel (z.B. Kohlenwasserstoffe wie Xylene, Aether wie Dioxan, Ester wie Butylacetat, und Dimethylformamid), gegebenenfalls in Gegenwart eines Katalysators, wie Dibutylzinndilaurat, Eisenacetylacetonat oder Triäthylendiamin. Es ist auch möglich, aber nicht bevorzugt, das Polyisocyanat zuerst mit der Monohydroxyverbindung umzusetzen und das erhaltenen Reaktionsprodukt weiter mit der Carbonsäureverbindung umzusetzen.

Nach dieser Umsetzung, bei der 30-80% der Isocyanatgruppen umgesetzt sein wird, wird die Reaktion mit einer Verbindung, die einen basischen Ringstickstoff enthält, durchgeführt. Dies wird zu einer Umsetzung von 20-70% der Isocyanatgruppen führen. Isocyanatgruppen, die gegebenenfalls nicht reagiert haben, werden schliesslich deaktiviert durch Reaktion mit niederem Alkohol oder einer vergleichbaren Verbindung. Dazu ist namentlich Butanol geeignet.

Die Erfindung wird jetzt an Hand einiger Beispiele erläutert, aber sie ist nicht auf diese beschränkt.

### Herstellungsbeispiel A

Unter Inertgas werden 31,92 g Caprolacton, 10,40 g HD-Ocenol 45/50 (Fa. Henkel & Cie., Düsseldorf) dispergiert. Man setzt 0,0012 g Dibutylzinndilaurat hinzu und erwärmt unter Rühren auf 170°C bis ein Festkörper von 99% erreicht ist (ca. 8 hrs.). Das Produkt ist bei Raumtemperatur fest und von schwachgelblicher Farbe.

### Herstellungsbeispiel B

60,0 g Polyethylenglykol mit der mittleren Molmasse von 1000 werden unter Inertgas geschmolzen. Unter Rühren werden 17,10 g Tetrachlorphthalsäureanhydrid zugesetzt und auf 150°C erwärmt. Die Reaktion ist vollständig abgelaufen, sobald eine Säurezahl von 43,6 erreicht ist; Dauer, ca. 4 hrs. Das Produkt ist bei Raumtemperatur wachsartig und von weisslichgelblichem Aussehen.

### Herstellungsbeispiel C

Unter Einleitung von Stickstoff werden 75,00 g Polyethylenglykol mit der mittleren Molekularmasse von 1000 geschmolzen. Bei Flüssigwerden des Diols werden 11,10 g Phthalsäureanhydrid hinzugefügt und unter Rühren auf 150°C erwärmt. Bei Erreichen einer Säurezahl von 48,87 ist die Reaktion vollständig abgelaufen. Das Produkt ist bei Raumtemperatur wachsartig.

### Herstellungsbeispiel D

394 g Pentahydro-perfluornonandiol werden geschmolzen. Unter Inertgas und Rühren fügt man 266,30 g Dodecenylbernsteinsäureanhydrid zu und erwärmt auf 150°C. Die Reaktion ist vollständig abgelaufen, sobald eine Säurezahl von 96 mg KOH/g erreicht ist. Das harzartige Produkt ist von gelber Farbe; es wird in 70%iger Form verwendet als Lösung in Methoxypropylacetat.

### Beispiel 1

Unter Inertgaseinleitung und Rühren werden 41,06 g eines Caprolactonpolyesters (Beispiel A) und 63,00 g Desmodur IL, (51%ig in Butylacetat) in 42,48 g Butylacetat und 40,99 g Methoxypropylacetat gelöst. Dann werden 1205 g Monohydroxycarbonsäure (Herstellungbeispiel C) hinzugefügt und der Ansatz auf 70°C erwärmt. Nach einer Reaktionszeit von 2 Stunden ist die Addition erfolgt, erkenntlich am NCO-Gehalt. Man lässt 32,44 g einer 20%-igen Lösung von 2-Amino-4-methylpyridin in NMP zulaufen und rührt noch 1 h weiter. Am Ende wird noch ein Überschuß an n-Butanol hinzugefügt zur Umsetzung von NCO-Gruppen, die nicht umgesetzt sind. Das viskose Endprodukt ist von gelblicher Farbe und hat einen Feststoffgehalt von 39,54%.

In einer Parallel-Versuchsanordnung wurde anstelle der Monohydroxycarbonsäure die äquivalente Menge an Polyethylenglykol 1000 eingesetzt (10,50 g). Hier trat bei Zulauf der 2-Amino-4-methylpyridin-Lösung schon Gelierung ein,nachdem erst 50% der Lösung zugesetzt waren!

### Beispiel 2

Unter Stickstoff-Einleitung und Rühren werden 23,27 g eines Caprolactonpolyesters (Herstellungsbeispiel A) und 42,00 g Desmodur IL (51%ig in Butylacetat) in 30,62 g Butylacetat und 36,02 g Methoxypropylacetat gelöst. Dann werden 7,68 g Monohydroxycarbonsäure (Beispiel B) zugegeben und der Ansatz auf 70°C erwärmt. Nach erfolgter Addition (ca. 2 hrs.) lässt man 15,11 g einer 16,67%igen NMP-Lösung von 3-Amino-1,2,4-triazol zulaufen und rührt noch 1 Stunde weiter. Am Ende wird noch ein Überschuß an n-Butanol hinzugefügt zur Umsetzung von NCO-Gruppen, die nicht umgesetzt sind. Das Produkt ist mittelviskos und von hellgelber Farbe.

In einem Parallelansatz wurden anstelle der 7,68 g Monohydroxycarbonsäure 7,00 g Polyethylenglykol 1000 eingesetzt. Hier trat bei Zulauf der 3-Amino-1,2,4-triazol-Lösung völliges Gelieren der Masse ein, so dass diese unbrauchbar war.

### Beispiel 3

Unter Stickstoff-Einleitung und Rühren werden 4,42 g eines Caprolactonpolyesters (Beispiel A) und 8,40 g Desmodur IL (51%ig in Butylacetat) in 6,12 g Butylacetat und 7,20 g Methoxypropylacetat gelöst. Dann werden 1,71 g Monohydroxycarbonsäure (Beispiel B) zugesetzt und der Ansatz auf 70°C erwärmt. Nach einer Reaktionszeit von 2 Stunden ist die Addition erfolgt, erkenntlich am NCO-Gehalt. Man lässt eine Mischung von 0,75 g 1-(3-Aminopropyl)imidazol gelöst in 2,95 g N-Methylpyrrolidon zulaufen und rührt noch 1 Stunde weiter. Am Ende wird noch ein Überschuß an n-Butanol hinzugefügt zur Umsetzung von NCO-Gruppen, die nicht umgesetzt sind. Das Produkt ist leicht gelb gefärbt und viskos.

In einem Parallelansatz wurden anstelle der 1,71 g Monohydroxycarbonsäure 1,40 g Polyethylenglykol 1000 eingesetzt. Bei diesem Ansatz trat bei Zulauf der 1-(3-Aminopropyl)imidazol-NMP-Lösung Gelierung ein, so dass das Produkt unbrauchbar war.

### Beispiel 4

Unter Stickstoff-Einleitung und Rühren werden in einer Synthese-Apparatur 25,39 g Caprolactonpolyester (Beispiel A) und 42,00 g Desmodur IL (51%ig in Butylacetat) in 38,31 g Butylacetat und 33,32 g Methoxypropylacetat gelöst. Dann werden 6,58 g Monohydroxycarbonsäure (Beispiel B) und 1,89 g Monohydroxycarbonsäurelösung (Beispiel D) zugesetzt und der Ansatz auf 70°C erwärmt. Nach einer Reaktionszeit von 2 Stunden ist die Addition erfolgt, erkenntlich am NCO-Gehalt. Man fügt 14,10 g Butylacetat und 14,10 Methoxypropylacetat hinzu und lässt darin 21,94 g einer 22,79 %igen Lösung von 1-(3-Aminopropyl)imidazol in NMP zulaufen und rührt noch eine Stunde weiter. Am Ende wird noch ein Überschuß an n-Butanol hinzugefügt zur Umsetzung von NCO-Gruppen, die nicht umgesetzt sind. Das viskose Endprodukt ist von strohgelber Farbe.

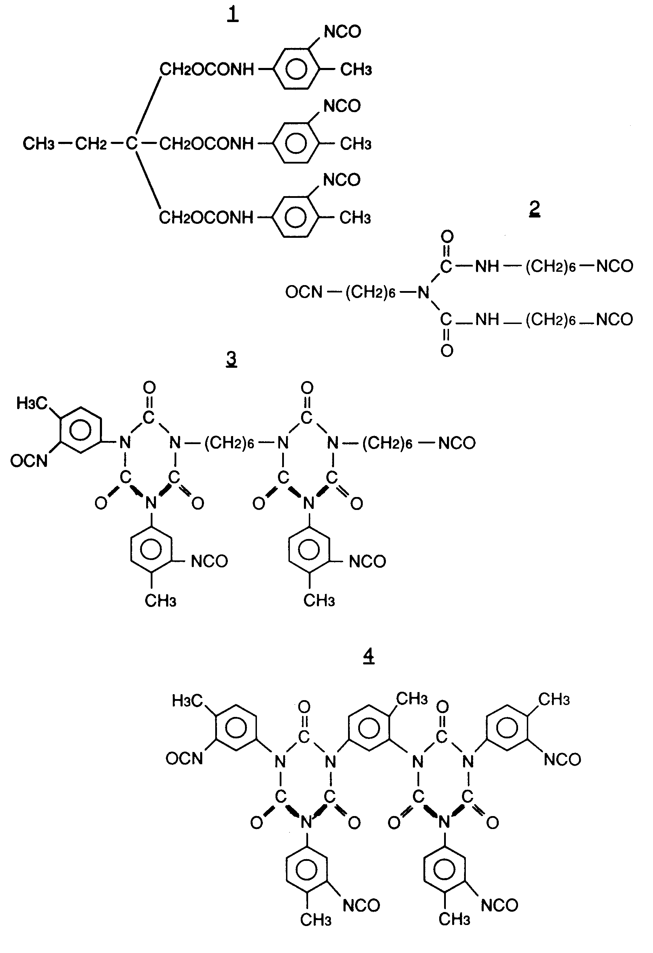

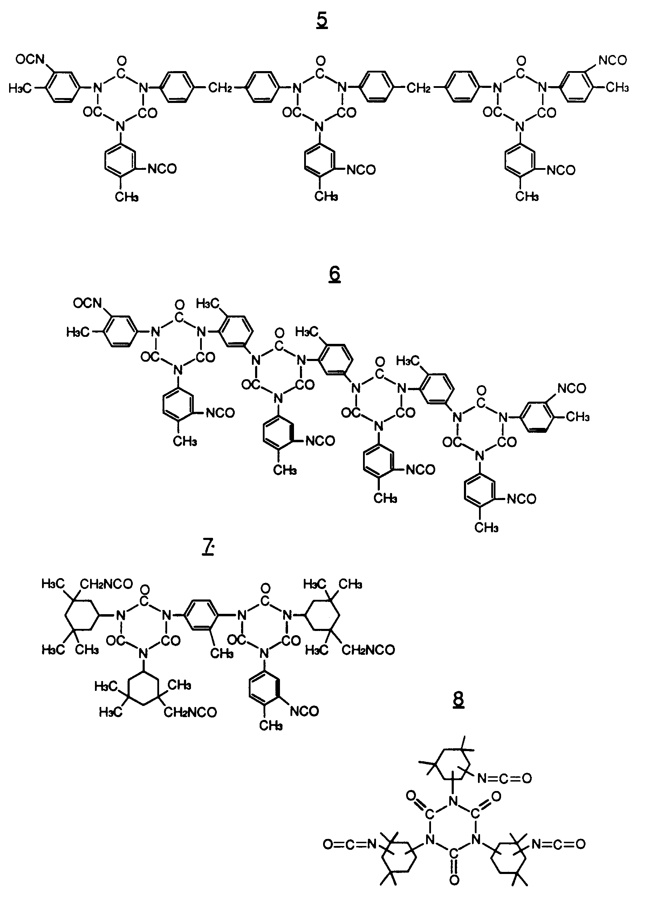

## Patentansprüche

1. Dispergiermittel oder deren Salze, umfassend
**A** das Reaktionsprodukt eines oder mehrerer Polyisocyanate mit einer mittleren Funktionalität von 2,0 bis 5, mit
**B** einem Gemisch aus
B₁ Monohydroxyverbindungen aus aliphatischem und/oder cycloaliphatischem und/oder araliphatischem Kohlenwasserstoff, der gegebenenfalls mit Aryl- und/oder Halogengruppen substituiert sein kann, oder aber eine oder mehrere Aether- und/oder Estergruppen enthalten kann und
B₂ Monohydroxy-Monocarbonsäureverbindungen, oder Monoamino-Monocarbonsäureverbindungen, wobei eine Dihydroxyverbindung im Gemisch anwesend sein kann, in einer Menge, dass damit weniger als 5% der Isocyanatgruppen umgesetzt wird, und
**C** wenigstens einer Verbindung aus der Gruppe von 2-(1-Pyrrolidyl)-ethylamin, 4-Amino-2-methoxy-pyrimidin, 4-(2-Hydroxyethyl)morpholin, 2-Mercaptopyrimidin, 4-(2-Aminoethyl)pyridin, 2-Amino-6-methoxybenzothiazol, 4-Aminomethyl)pyridin, 3-Amino-1,2,4-triazol, 1-(3-Aminopropyl)imidazol, 4-(2-Hydroxyethyl)pyridin, 1-(2-Hydroxyethyl)imidazol und 3-Mercapto-1,2,4-triazol,
wobei von den Isocyanatgruppen 30-80% mit B und 20-70% mit C umgesetzt sind.

2. Dispergiermittel nach Anspruch 1 oder 2, dadurch gekennzeichnet, dass die Monohydroxyverbindung ein Molekulargewicht von mindestens 500 hat.

3. Dispergiermittel nach Anspruch 1 oder 2, dadurch gekennzeichnet, dass sich im Gemisch von Hydroxyverbindungen eine Monohydroxy-Monocarbonsäureverbindung befindet auf der Basis einer Kohlenwasserstoffverbindung, wobei sich zwischen der Hydroxylgruppe und der Carbonsäuregruppe mindestens acht Kohlenstoffatome befinden, wobei die Kohlenstoffkette noch durch Aether und/oder Ester-Urethangruppen unterbrochen sein kann.

4. Dispergiermittel nach einem der Ansprüche 1-3, dadurch gekennzeichnet, dass das Molekulargewicht der Monohydroxy-Monocarbonsäureverbindung mindestens 500 beträgt.

5. Dispergiermittel nach einem der Ansprüche 1-4, dadurch gekennzeichnet, dass die Monohydroxy-Monocarbonsäureverbindung erhalten ist durch Veresterung von Hydroxycarbonsäuren, oder durch Umsetzung eines Diols mit einer Dicarbonsäure oder einem Anhydrid.

6. Dispergiermittel nach einem der Ansprüche 1-5, dadurch gekennzeichnet, dass die Monohydroxy-Monocarbonsäureverbindung in einem Unterschuss in bezug auf die Monohydroxyverbindung vorhanden ist.

7. Dispergiermittel nach einem der Ansprüche 1-6, dadurch gekennzeichnet, dass das Verhältnis der Anzahl Hydroxylgruppen von Monohydroxyverbindung zu der Anzahl Hydroxylgruppen von Monohydroxy-Monocarbonsäureverbindung variiert von 1:1 bis 10:1.

8. Dispergiermittel nach einem der Ansprüche 1-7, dadurch gekennzeichnet, dass im Gemisch **B** keine Dihydroxyverbindung anwesend ist.

9. Verfahren zur Herstellung von einem Dispergiermittel nach Anspruch 1-8, umfassend die Umsetzung von
**A** einem oder mehreren Polyisocyanaten mit einer mittleren Funktionalität von 2,0 bis 5, mit
**B** einem Gemisch aus
B₁ Monohydroxyverbindungen aus aliphatischem und/oder cycloaliphatischem und/oder araliphatischem Kohlenwasserstoff, der gegebenenfalls mit Aryl- und/oder Halogengruppen substituiert sein kann, oder aber eine oder mehrere Aether- und/oder Estergruppen enthalten kann und
B₂ Monohydroxy-Monocarbonsäureverbindungen, oder Monoamino-Monocarbonsäureverbindungen, wobei eine Dihydroxyverbindung im Gemisch anwesend sein kann, in einer Menge, dass damit weniger als 5% der Isocyanatgruppen umgesetzt wird, und
**C** einer Verbindung aus der Gruppe von 2-(1-Pyrrolidyl)-ethylamin, 4-Amino-2-methoxy-pyrimidin, 4-(2-Hydroxyethyl)morpholin, 2-Mercaptopyrimidin, 4-(2-Aminoethyl)pyridin, 2-Amino-6-methoxybenzothiazol, 4-Aminomethyl)pyridin, 3-Amino-1,2,4-triazol, 1-(3-Aminopropyl)imidazol, 4-(2-Hydroxyethyl)pyridin, 1-(2-Hydroxyethyl)imidazol und 3-Mercapto-1,2,4-triazol,
wobei von den Isocyanatgruppen 30-80% mit B und 20-70% mit C umgesetzt sind.

10. Verwendung des Dispergiermittels nach Anspruch 1-8, zur Dispergierung von Feststoffen.

11. In flüssige Systeme einzuarbeitende pulver- oder faserförmige Feststoffe, die mit Dispergiermitteln nach Anspruch 1-9 beschichtet sind.

12. Lacke, die Feststoffe nach Anspruch 11 enthalten.

## Claims

1. Dispersants or their salts, comprising
A the reaction product of one or more poly-isocyanates with an average functionality of 2.0 to 5, with
B a mixture of
B₁ monohydroxic compounds from aliphatic and/or cyclo-aliphatic and/or araliphatic carbohydrates that may be substituted with aryl and/or halogen groups, or that otherwise may contain one or more ether and/or ester groups; and
B₂ Monohydroxy-monocarbonic acid compounds or monoamine-monocarbonic acid compounds, in which a dihydroxy linkage may be present in the mixture, in a quantity in which less than 5 % of the isocyanate groups is converted; and
C at least one compound from the group of 2-(1-pyrrolidyl)-ethylamine, 4-amino-2-methoxy-pyrimidine, 4-(2-hydroxyethyl)morpholine, 2-mercaptopyrimidine, 4-(2-aminoethyl)pyridine, 2-amino-6-methoxybenzothiazole, 4-aminomethylpyridine, 3-amino-1,2,4-triazole, 1-(3-aminopropyl)imidazole, 4-(2-hydroxyethyl)pyridine, 1-(2-hydroxyethyl)imidazole and 3-mercapto-1,2,4-triazole;
in which 30 - 80 % of the isocyanate groups is converted with B, and 20 - 70 % of the isocyanate groups is converted with C.

2. Dispersants according to Claim 1, characterised in that the monohydroxy compound has a molecular weight of at least 500.

3. Dispersants according to Claims 1 or 2, characterised in that the mixture of hydroxy compounds contains one monohydroxy-monocarbonic acid compound on the basis of a hydrocarbon compound, comprising at least 8 carbon atoms between the hydroxyl group and the carbonic acid group, and in which the carbon atom chain may be interrupted by ether and/or ester-urethane groups.

4. Dispersants according to Claims 1 - 3, characterised in that the monohydroxy-monocarbonic acid compound has a molecular weight of at least 500.

5. Dispersants according to Claims 1 - 4, characterised in that the monohydroxy-monocarbonic acid compound has been obtained either through esterification of hydroxycarbonic acids, or by the conversion of a diol with a dicarbonic acid or with an anhydride.

6. Dispersants according to Claims 1 - 5, characterised in that there is a deficit of the monohydroxy-monocarbonic acid compound with respect to the monohydroxy compound.

7. Dispersants according to Claims 1 - 6, characterised in that the ratio of the number of hydroxyl groups in monohydroxy compounds with respect to the number of hydroxyl groups in monohydroxy-monocarbonic acid compounds lies in the range of 1:1 - 10:1.

8. Dispersants according to Claims 1 - 7, characterised in that in mixture B there is no dihydroxy compound.

9. Procedures for the manufacture of dispersants according to Claims 1 - 8, including the turnover of
A one or more poly-isocyanates with an average functionality of 2.0 to 5, with
B a mixture of
B₁ monohydroxic compounds from aliphatic and/or cyclo-aliphatic and/or araliphatic carbohydrates that may be substituted with aryl and/or halogen groups, or that otherwise may contain one or more ether and/or ester groups; and
B₂ Monohydroxy-monocarbonic acid compounds or monoamine-monocarbonic acid compounds, in which a dihydroxy linkage may be present in the mixture, in a quantity in which less than 5 % of the isocyanate groups is converted; and
C one compound from the group of 2-(1-pyrrolidyl)-ethylamine, 4-amino-2-methoxy-pyrimidine, 4-(2-hydroxyethyl)morpholine, 2-mercaptopyrimidine, 4-(2-aminoethyl)pyridine, 2-amino-6-methoxybenzothiazole, 4-aminomethylpyridine, 3-amino-1,2,4-triazole, 1-(3-aminopropyl)imidazole, 4-(2-hydroxyethyl)pyridine, 1-(2-hydroxyethyl)imidazole and 3-mercapto-1,2,4-triazole;
in which 30 - 80 % of the isocyanate groups is converted with B, and 20 - 70 % of the isocyanate groups is converted with C.

10. The usage of dispersants according to Claims 1 - 8 to disperse solid compounds.

11. Solid compounds in the form of powder or fibre affecting fluid systems, which are classified together with dispersants according to Claim 11.

12. Lacquers that contain solid compounds according to Claim 11.

## Revendications

1. Agents dispersants ou leurs sels, comprenant:
A le produit de réaction d'un ou plusieurs polyisocyanates avec une fonctionnalité moyenne de 2,0 à 5 avec
B un mélange de
B1 composés monohydroxylés d'un hydrocarbure aliphatique et/ou cycloaliphatique et/ou araliphatique, qui peut éventuellement être substitué avec des radicaux aryle et/ou des halogènes ou peut contenir un ou plusieurs radicaux éther et/ou ester et
B2 des composés d'acide monohydroxymonocarboxylique ou des composés d'acide monoaminomonocarboxylique, un composé dihydroxylé pouvant être présent en mélange dans une quantité telle que moins de 5 % des radicaux isocyanate réagissent et
C au moins un composé du groupe composé de la 2-(1-pyrrolidyl)-éthylamine, la 4-amino-2-méthoxypyrimidine, la 4-(2-hydroxyéthyl)-morpholine, la 2-mercaptopyrimidine, la 4-(2-aminoéthyl)-pyridine, le 2-amino-6-méthoxybenzothiazole, la 4-(aminométhyl)-pyridine, le 3-amino-1,2,4-triazole, le 1-(3-aminopropyl)-imidazole, la 4-(2-hydroxyéthyl)-pyridine, le 1-(2-hydroxyéthyl)-imidazole et le 3-mercapto-1,2,4-triazole,
30 à 80 % des radicaux isocyanate réagissant avec B et 20 à 70 % avec C.

2. Agents dispersants selon la revendication 1 ou 2, caractérisés en ce que le composé monohydroxylé possède un poids moléculaire d'au moins 500.

3. Agents dispersants selon la revendication 1 ou 2, caractérisés en ce que le mélange de composés hydroxylés comprend un composé d'acide monohydroxymonocarboxylique sur la base d'un composé hydrocarbure, huit atomes de carbone se trouvant au moins entre le radical hydroxyle et le radical d'acide carboxylique et la chaîne de carbone pouvant encore être interrompue par des radicaux éther et/ou esteruréthane.

4. Agents dispersants selon l'une des revendications 1 à 3, caractérisés en ce que le poids moléculaire du composé d'acide monohydroxymonocarboxylique s'élève à au moins 500.

5. Agents dispersants selon l'une des revendications 1 à 4, caractérisés en ce que le composé d'acide monohydroxymonocarboxylique est obtenu par estérification d'acides hydroxycarboxyliques ou par réaction d'un diol avec un acide dicarboxylique ou un anhydride.

6. Agents dispersants selon l'une des revendications 1 à 5, caractérisés en ce que le composé d'acide monohydroxymonocarboxylique est présent dans une quantité insuffisante par rapport au composé monohydroxylé.

7. Agents dispersants selon l'une des revendications 1 à 6, caractérisés en ce que le rapport du nombre de radicaux hydroxyle du composé monohydroxylé au nombre de radicaux hydroxyle du composé d'acide monohydroxymonocarboxylique varie de 1 : 1 à 10 : 1.

8. Agents dispersants selon l'une des revendications 1 à 7, caractérisés en ce que le mélange B ne contient pas de composé dihydroxylé.

9. Procédé de préparation d'un agent dispersant selon la revendication 1 à 8 comprenant la réaction de
A un ou plusieurs polyisocyanates avec une fonctionnalité moyenne de 2,0 à 5 avec
B un mélange de:
B1 des composés monohydroxylés d'hydrocarbure aliphatique et/ou cycloaliphatique et/ou araliphatique qui peut éventuellement être substitué avec des radicaux aryle et/ou des halogènes ou peut contenir un ou plusieurs radicaux éther et/ou ester et
B2 des composés d'acide monohydroxymonocarboxylique ou des composés d'acide monoaminomonocarboxylique, un composé dihydroxylé pouvant être présent en mélange dans une quantité telle que moins de 5 % des radicaux isocyanate soient transformés et
C un composé du groupe composé de la 2-(1-pyrrolidyl)-éthylamine, la 4-amino-2-méthoxypyrimidine, la 4-(2-hydroxyéthyl)-morpholine, la 2-mercaptopyrimidine, la 4-(2-aminoéthyl)-pyridine, le 2-amino-6-méthoxybenzothiazole, la 4(aminométhyl)-pyridine, le 3-amino-1,2,4-triazole, le 1-(3-aminopropyl)-imidazole, la 4-(2-hydroxyéthyl)-pyridine, le 1-(2-hydroxyéthyl)-imidazole et le 3-mercapto-1,2,4-triazole,
30 à 80 % des radicaux isocyanate réagissant avec B et 20 à 70 % avec C.

10. Mise en oeuvre de l'agent dispersant selon l'une des revendications 1 à 8, pour la dispersion de matières solides.

11. Matières solides pulvérulentes ou fibreuses à incorporer dans des systèmes liquides, revêtues d'agents dispersants selon l'une des revendications 1 à 9.

12. Vernis qui contiennent des matières solides selon la revendication 11.
